# EUROPÄISCHE PATENTSCHRIFT

(11) **EP 1 168 533 B1**
(45) Veröffentlichungstag und Bekanntmachung des Hinweises auf die Patenterteilung: **06.10.2004**
(21) Anmeldenummer: 01810537.9
(22) Anmeldetag: 01.06.2001
(51) Int. Cl.: H01S 3/08, H01S 3/00, G02F 1/35

(54) **Kompensation thermooptischer Effekte**
Compensation of thermo-optic effects
Compensation des effets thermo-optiques

(30) Priorität: 23.06.2000 EP 00810551
(43) Veröffentlichungstag der Anmeldung: 02.01.2002
(73) Patentinhaber: Universitaet Bern, 3012 Bern (CH)
(72) Erfinder: Weber, Heinz, 3122 Kehrsatz (CH); Graf, Thomas, 3322 Urtenen (CH)
(74) Vertreter: Roshardt, Werner Alfred, Dipl.-Phys.

(56) Entgegenhaltungen:
- US-A- 3 434 779
- US-A- 3 577 098
- US-A- 5 386 427
- KOCH R: "Self-adaptive optical elements for compensation of thermal lensing effects in diode end-pumped solid state lasers - proposal and preliminary experiments" OPTICS COMMUNICATIONS,NL,NORTH-HOLLAND PUBLISHING CO. AMSTERDAM, Bd. 140, Nr. 1-3, 15. Juli 1997 (1997-07-15), Seiten 158-164, XP004082613 ISSN: 0030-4018

## Beschreibung

### Technisches Gebiet

Die Erfindung betrifft ein Verfahren zur Kompensation optisch thermischer Effekte gemäß dem Oberbegriff des Patentanspruchs 1, eine optische Einheit hierzu gemäß dem Oberbegriff des Patentanspruchs 4 sowie eine optische Anordnung gemäß dem Oberbegriff des Patentanspruchs 10.

### Stand der Technik

Werden optische Elemente erwärmt, so ändern sich in der Regel deren optische Eigenschaften (Brechungsindex, äussere Kontur), was Veränderungen der Phasenfront eines in solchen Elementen geführten Strahles zur Folge hat (thermische Linse, thermische Doppelbrechung). Thermisch optische Effekte sind vorzugsweise bei optischen Hochleistungsoszillatoren äußerst störend, da sie die Strahlqualität des zu erzeugenden Hochleistungslaserstrahls verschlechtern (Strahlverformung, Spannungsdoppelbrechung, Strahlabweichungen usw.). Die thermische Linsenwirkung und die optischen Aberrationen werden durch anisotrope Temperaturverteilungen im optischen Medium hervorgerufen.

Ein Beispiel zur Elimination thermisch optischer Effekte in insbesondere kontinuierlich arbeitenden Hochleistungs-CO₂-Laserresonatoren wird in der Veröffentlichung A.V. Kudryashov, "Intracavity Laser Beam Control", SPIE Conf. on Laser Resonator II, San Jose, Calif., Seite 32 - 40; 1999 angegeben. Die Kompensation wird hier aktiv mittels einer sogenannten adaptiven Optik vorgenommen. Die adaptive Optik ist ein in seiner Oberflächenkontur verstellbarer Spiegel im gefalteten Strahlengang innerhalb des Resonators. Die Verstellung wird mit elektrisch ansteuerbaren piezoelektrischen Keramiken vorgenommen. Für die Regelung der Ansteuerung wird ein geringer Teil der Ausgangsstrahlung ausgekoppelt, durch eine Blende geführt und auf einen Thermosensor gegeben. Je nach empfangener Strahlungsleistung werden dann die einzelnen "Spiegelelemente" über eine Regelschaltung derart angesteuert, dass sich eine Spiegelverformung ergibt, welche Oberflächenverformungen der anderen optischen Komponenten kompensiert. Eine analoge adaptive Verstellung einer Spiegeloberfläche in einem gefalteten Strahlengang im Resonator ist in L. Flath, J. An, J. Brase, C. Varrano, C.B. Dane, S. Fochs, R. Hurd, M. Kartz, R. Sawvel; "Development of Adaptive Resonator Techniques for High-Power Lasers", Veröffentlichung zur Konferenz "Workshop an Adaptive Optics for Industry and Medicine", Durham (GB); Seite 163-168; 12.-16. Juli 1999 beschrieben.

Die Verformung eines Laserresonatorsspiegels zur Kompensation ist in N. Kugler, A. Vazquez, H. Laabs, H. Weber; "High-Power Solid-State Laser with Birefringence Compensation and Adaptive Resonator Mirror"; Veröffentlichung zur Konferenz "Workshop an Adaptive Optics for Industry and Medicine", Durham (GB); Seite 149-154; 12-16 Juli 1999 beschrieben.

Anstatt die Oberflächenkrümmungen von optischen Komponenten, insbesondere von Spiegeln aktiv gesteuert zu verändern, können im Laserresonator zur Kompensation thermischer Effekte am aktiven Element auch Linsen in der Resonatorachse verschoben werden. Derartige Anordnungen sind in St. Jackel, I. Moshe, R. Lavi; "High Performance Oscillators Employing Adaptive Optics Comprised of Discrete Elements"; SPIE Conf. on Laser Resonator II, San Jose, Calif., Seite 42 - 49; 12-16. Juli 1999; beschrieben.

Eine Kombination von mehreren, in ihrer optischen Wirkung steuerbaren Elementen in einem Laserresonator sind ebenfalls möglich. So werden in I. Moshe, S. Jakkel; "Enhanced Correction of Thermo-Optical Aberations in Laser Oscillators", SPIE Conf. on Laser Resonator II, San Jose, Calif., Seite 181-186; 12.-16. Juli 1999 eine in ihrem Abstand zum Laserresonatorspiegel geregelt verstellbare Linse mit je einem Faraday-Rotator vor und hinter dem aktiven Medium eingesetzt.

Aus der DE-A 197 14 175 ist eine im gesamten Bereich einer Pumpleistung wirkende Kompensation der thermischen Linse im Laser-Medium bekannt. Die Kompensation der thermischen Linse wurde dadurch erreicht, dass ein Teil des Pumplichts selbst bei einem longitudinal gepumpten aktiven Medium mit seiner variierenden Leistung genutzt wurde, um ein entsprechendes die thermische Linse im aktiven Medium kompensierendes optische Element zu schaffen. Dieses Element war entweder ein modifizierter Einkoppelspiegel oder ein als Linse mit negativer (im Falle einer negativen thermischen Linse im Laser-Medium positiver) Brennweite wirkendes zusätzlich eingeführtes Element. Als Element könnte auch ein geeignetes gasförmiges oder flüssiges Medium, welches sich in einer geeigneten Küvette befand, verwendet werden. Neben der Pumplichtstrahlung könnte auch ein Teil der erzeugten Laserleistung zur Kompensation durch ein entsprechendes Element des Resonators geschickt werden.

Die in der US-A 3 434 779 beschriebene Anordnung diente zur Konstanthaltung einer Laserleistung, wobei die Konstanthaltung durch die Verwendung thermisch optischer Effekte erreicht wird.

Zur Konstanthaltung wird eine Nitrobenzol-Zelle verwendet, welche einen in sie eingestrahlten Laserstrahl in Abhängigkeit von der Strahlleistung aufweitet. Dieser aufgeweitete Strahl trifft dann auf eine Blende, welche nur den zentralen Strahlbereich passieren lässt.

In der Veröffentlichung von R. Koch, "Self-adaptive optical elements for compensation of thermal lensing effects in diode end-pumped solid state lasers - proposal and preliminary experiments"; Optics Communications 140 (15. Juli 1997), S. 158 - 164 wird die Kompensierung thermischer Linseneffekte im Laserresonator beschrieben. Die Kompensation erfolgte mittels eines Resonatorspiegels, dessen Spiegelsubstrat die Pumpstrahlung absorbierte und einen großen positiven thermischen Ausdehnungskoeffizienten aufwies. Als weitere Kompensationsmöglichkeit wurde eine antireflekionsbeschichtete Platte angegeben, welche einen großen negativen thermischen Koeffizienten des Brechungsindexes aufwies.

Weitere Beispiele sind in der US-A 5 386 427, der US-A 5 751 750, der US-A 3 662 281, der US-A 3 609 584, der US-A 3 577 098 und der US-A 4 848 881 beschrieben.

### Aufgabe der Erfindung

Aufgabe der Erfindung ist es, gegenüber dem bekannten Stand der Technik eine bedeutend wirkungsvollere Kompensation der oben beschriebenen, durch radiale Temperaturgradienten in optischen Komponenten hervorgerufene optische Änderungen zu erreichen.

### Lösung der Aufgabe

Die obengenannte Aufgabe wird dadurch gelöst, indem im Gegensatz zum Stand der Technik die unterschiedlichen Funktionen der Absorption (Erwärmung mittels Strahlungsabsorption), der radialen Wärmeleitung (zur Erzeugung einer leistungsabhängigen Temperaturverteilung) und die thermische Dispersion (zur Erzeugung einer thermischen Linse) auf verschiedene, d. h. mehrere Elemente mit unterschiedlichen Materialeigenschaften verteilt wird. Gegenüber dem Stand der Technik müssen nun nicht alle Funktionen von ein- und demselben Element erfüllt werden.

In Gegensatz zum Stand der Technik wird hier auf einen direkten Wärmeüber gang durch innige Berührung zwischen einer optischen Komponente und dem Kompensationsmedium abgestellt. In bevorzugter Weise ist man bestrebt, in der optischen Komponente und im Kompensationsmedium eine annähernd gleiche radiale Wärmeverteilung zu erreichen.

Als Kompensationsmedium können Materialien verwendet, welche keine oder nur vernachlässigbar geringe mechanischen Scherkräfte übertragen können. Derartige Materialien sind Flüssigkeiten, Gele und Gase. Es können aber auch elastische Medien (Festkörper) verwendet werden. Bei Festkörpern ist jedoch darauf zu achten, dass aneinander anliegende Flächen optisch eng anliegen, bevorzugt angesprengt sind. Optische Oberflächeneffekte sollten sich hierbei nicht ergeben.

Diese Art der Kompensation lässt sich bei vielen optischen Komponenten anwenden; bevorzugt wird man Sie jedoch bei Lasern, insbesondere bei Hochleistungslasern, bei denen ein gute Strahlqualität gewünscht ist, anwenden.

In den Strahlengang einer optischen Anordnung, welche beispielsweise ein Laseroszillator oder Laserverstärker sein kann, wird eine optische Einheit für eine Kompensation thermisch optischer Effekte im Strahlengang durch in diesem vorhandene optische Komponenten eingebracht. Die im Strahlengang befindliche optische Einheit hat wenigstens zwei unterschiedliche Materialeigenschaften aufweisende, für die Kompensation wirksam zusammen spielende optische Elemente, auf die zur Kompensation eine Erwärmung mittels Strahlungsabsorption, eine Wärmeleitung zur Erzeugung einer leistungsabhängigen Temperaturverteilung und eine thermische Dispersion zur Erzeugung einer thermischen Linse in bevorzugt unterschiedlicher Einwirkung verteilbar ist.

Eines der Elemente hat einen optischen Kompensationsraum, der mit einem optisch transparenten Kompensationsmedium gefüllt, insbesondere vollständig gefüllt ist: Beidseits zum Kompensationsraum sind als weiteres Element mit einer Strahlungsabsorption optisch transparente Festkörper angeordnet. Das Kompensationsmedium weist zu den beidseits angeordneten Festkörpern einen derart engen thermischen Kontakt auf, dass ein guter Wärmeübergang von den Festkörpern zum Kompensationsmedium gewährleistet ist. Der optische Kompensationsraum kann nun nur das Kompensationsmedium sein, wenn es sich um einen Festkörper oder um ein festes Gel handelt; er kann aber auch ein mit dem Kompensationsmedium zu füllender Raum sein, wenn es ich um eine Flüssigkeit oder ein fließfähiges Gel handelt.

Den Kompensatiönsraum wird man vorzugsweise derart ausbilden, dass er sich senkrecht zur optischen Achse des Strahlenganges erstreckt. Wird die optische Einheit in einem Laserresonator eingesetzt, sind in der Regel die Komponenten des Oszillators oder Verstärkers kreiszylindrisch ausgebildet und eine Kühlung erfolgt am Umfang. Man wird deshalb auch den Kompensationsraum zur Achse des Strahlenganges radialsymmetrisch ausbilden und die zur optischen Achse des Strahlengangs radiale Ausdehnung des Kompensationsraums derjenigen der benachbarten Festkörper anpassen. Bevorzugt wird man die radialen Abmessunge des Kompensationsraumes bzw. des Kompensationsmediums und diejenige des angrenzenden benachbarten Festkörpers gleich wählen.

Die dem Kompensationsmedium unmittelbar benachbarten Festkörper wird man vorzugsweise in einer kühlenden Halterung halten, welche vorzugsweise den gesamten Mantel des Festkörpers im innigen Wärmekontakt vollständig umschliesst. Hierdurch ergibt sich eine platzsparende Bauweise mit einem guten Wirkungsgrad.

Wird ein keine mechanischen Scherkräfte übertragendes Material als Kompensationsmedium verwendet, kann vorzugsweise ein Ausdehnungsraum vorgesehen werden, der mit dem Kompensationsraum verbunden ist, in den das Kompensationsmedium bei einer thermischen Beaufschlagung einen Volumenausgleich vornehmen kann. Einen derartigen Ausdehnungsraum wird man vor allem bei einem flüssigen bzw. fließfähigen Kompensationsmedium verwenden. Bei einem kleinen Volumen des Kompensationsmediums reicht manchmal sogar nur eine kleine Gasblase. Werden feste, nicht fließende Kompensationsmedien verwendet, so kann auf einen Ausdehnungsraum verzichtet werden, da die thermische Ausdehnung klein ist. Die kleine noch vorhandene Ausdehnung schiebt dann geringfügig an den benachbarten optischen Komponenten.

Wie schon oben angedeutet, wird eine optische Anordnung mit einer derartigen optischen Einheit bevorzugt als Laserresonator oder -verstärker ausgebildet, um z.B. hohe Laserausgangsleistungen mit guter Strahlqualität zu erzeugen. Hierbei ist das aktive Medium in Teilmedien unterteilt. Zwischen den Teilmedien ist als ein optisches Element ein mit einem Kompensationsmedium gefüllter Kompensationsraum als weiteres optisches Element der optischen Einheit angeordnet, wobei jedes Teilmedium als optisch transparenter Festkörper der Einheit wirkt. Als Kompensationsmedium können auch hier feste und fließfähige Medien verwendet werden. Für fließfähige Medien wird man dann einen Kompensationsraum vorsehen, in den diese eingefüllt werden können. Bei nicht fließfähigen Medien wird das Medium selbst mit den benötigten Raumabmessungen hergestellt.

Die Vorteile der Erfindung und deren Anwendungsgebiete ergeben sich aus der nachfolgenden Beschreibung.

### Kurze Beschreibung der Zeichnungen

Anschließend werden Beispiele des erfindungsgemäßen Verfahrens sowie des erfindungsgemäßen Gegenstands an Hand der Figuren erläutert. Es zeigen:
- Fig.1: eine schematische Darstellung eines Laserresonators als optische Anordnung mit einer kompensierenden optischen Einheit,
- Fig. 2: eine Variante zur Darstellung in **Figur 1**, wobei hier ein aktives Lasermedium in Teilelemente aufgespalten ist und gleich zwischen diesen Elementen die optische Kompensation vorgenommen wird,
- Fig. 3: eine Variante zu den in den **Figuren 1** und **2** dargestellten Ausführungsbeispielen und
- Fig. 4: eine Variante zu der in **Figur 3** dargestellten optischen Anordnung, wobei jedoch mehrere optische Kompensationselemente vorhanden sind.

### Wege zur Ausführung der Erfindung

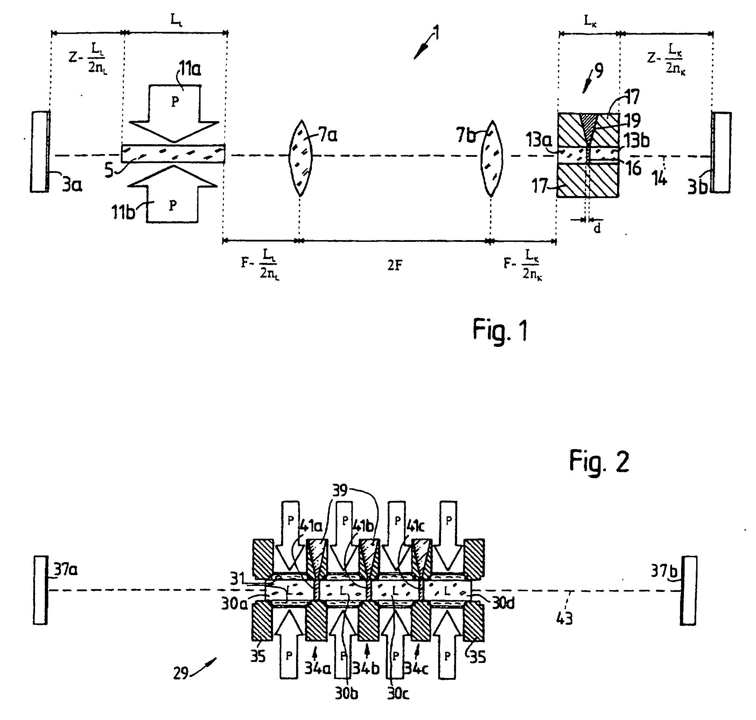

Der in **Figur 1** dargestellte beispielsweise Laserresonator **1** ist als symmetrischer Resonator mit zwei parallelen Spiegeln **3a** und **3b** aufgebaut. Im Laserresonator **1** ist ein Laserstab **5** als aktives Medium, zwei Linsen **7a** und **7b** und die erfindungsgemäße optische Einheit **9** angeordnet. Der Laserstab **5** wird, wie durch die Pfeile **11a** und **11b** schematisch angedeutet, transversal optisch gepumpt. Durch dieses Pumpen wird der Laserstab **5** in seinem Inneren erwärmt. An seinem Äusseren wird er gekühlt. Es bildet sich somit ein Temperaturgradient im Laserstab **5** aus; eine sogenannte thermische Linse hat sich gebildet. Die Brechkraft dieser thermischen Linse ändert sich mit der eingestrahlten Pumpenergie und der erzeugten Laserstrahlung, was wiederum zu Veränderungen in der Schwingungsform des Laserresonators führt und sich dann wieder auf die erzeugte Strahlungsleistung und deren Moden auswirkt. Ein derartiges Verhalten ist äusserst unerwünscht.

In dem in **Figur 1** skizzierten Laserresonator **1** werden die beiden Linsen **7a** und **7b** zur optimalen Überlagerung der thermischen Linse im Laserstab **5** mit jener in der Einheit **9** eingesetzt.

Die zur thermischen Kompensation verwendete Einheit **9** besteht hier aus zwei seitlich gekühlten, optisch transparenten zylindrischen Stäben **13a** und **13b** und einem schmalen Kompensationsraum **15** mit einem Kompensationsmedium **16**. Der Kompensationsraum **15** erstreckt sich senkrecht zur optischen Achse **14** des mit dem Laserstab **5** erzeugten Strahlenganges. Als Kompensationsmedium kann eine Flüssigkeit oder ein Gel verwendet werden. Als Kompensationsmaterialien können Wasser, deuteriertes Wasser oder optische Flüssigkeiten und Gele, wie beispielsweise vorzugsweise für den sichtbaren Spektralbereich OCF-446, OCF-452, OCF-463, OC-431 A-LVP, OC-440, OC-459, OC-462, OCK-433, OCK-451 verwendet werden. Diese Produkte werden beispielsweise von der Firma Nye Optical Products hergestellt. Ein weiteres Kompensationsmaterial ist ein Silicon "SYLGARD 182" von Dow Corning. Für den an den sichtbaren Bereich anschließenden längerwelligen Spektralbereich wird man vorzugsweise volldeuterierte, chlorierte und fluorierte Gele oder Flüssigkeiten verwenden. Andere Flüssigkeiten und Gele können selbstverständlich verwendet werden. Es können auch Gase mit geeigneten optischen und thermischen Eigenschaften (Brechungsindex, thermische Dispersion) verwendet werden. Die Vorteile von Flüssigkeiten und Gelen sind eine sehr ausgeprägte negative thermische Dispersion (dn/dT) und das Ausbleiben von thermisch induzierter Doppelbrechung, da keine durch thermische Ausdehnung verursachte Druckgradienten entstehen können. Diese Kompensationsmedien übertragen keine mechanischen Scherkräfte. Für den Volumenausgleich bei einer thermischen Beaufschlagung des Kompensationsmediums ist ein Ausdehnungsraum **19** vorgesehen.

Die Stäbe **13a** und **13b** sowie auch das Kompensationsmedium **16** werden aussen durch eine Halterung **17** gekühlt. Als Stabmaterial kommt Glas oder noch besser ein doppelbrechender Kristall zur Vermeidung von thermisch induzierter Depolarisation in Frage. Ein doppelbrechender Kristall als Stab **13a** bzw. **13b** ist insbesondere dann von Vorteil, wenn der Laserstab **5** ebenfalls doppelbrechend ist. Die kristalloptischen Achsen sind aufeinander auszurichten.

Das Erwärmen des Mediums **16** geschieht nun zu einem kleinen Teil durch Absorption eines geringen Teils der transmittierenden Laserstrahlung (Restabsorption) und zum anderen Teil durch Wärmeleitung aus den benachbarten Stäben **13a** und **13b** in das Medium **16** hinein. Die Stäbe ihrerseits werden durch eine Absorption eines kleinen Teils der sie durchstrahlenden Laserstrahlung erwärmt. Man könnte auch zusätzlich Wärme transversal von einer Heizquelle einstrahlen. Damit auch im Kompensationsmedium **16** eine zur Kompensation geeignete leistungabhängige Linse entsteht, muss sich darin eine leistungsabhängige Temperaturverteilung einstellen. Dies bedingt, dass die Wärmeleitung vorwiegend transversal aus dem Material heraus stattfinden muss (quer zur Achse **14** der Strahlausbreitung). Besonders bei in Strahlausbreitungsrichtung schmalen Kompensationsmedien würde eine vorwiegende Kühlung über die Stirnflächen dazu führen, dass eine sich einstellende Temperaturverteilung vor allem durch die Intensitätsverteilung des transmittierten Strahls und nur in geringem Maß durch dessen Leistung beeinflusst wird. Dieser Vorgang wird in der Einheit **9** vermieden, indem das kompensierende Medium zwischen durch eine geringe Absorption des transmittierten Laserstrahls erwärmten und radial gekühlten Stäben **13a** und **13b** angeordnet ist. Die gewünschte leistungsabhängige Temperaturverteilung wird nun durch die Heiz-, Kühl- und Wärmeleitprozesse in den Stäben **13a** und **13b** und im Medium **16** erzeugt und durch einen Wärmekontakt auf das Kompensationsmedium **16** übertragen.

Anstatt nur die Stäbe **13a** und **13b** zu heizen, kann die Erwärmung durch eine geringe Strahlungsabsorption im Kompensationsmedium **16** erfolgen. Unabhängig davon, ob die Erwärmung vorwiegend durch Absorption im Kompensationsmedium **16** oder in den Stäben **13a** und **13b** erzeugt wird, stellt sich dank dem Wärmekontakt vom Kompensationsmedium **16** zu den benachbarten Stäben **13a** und **13b** und der radialen Kühlung der Stäbe **13a** und **13b** die gewünschte leistungsabhängige Linse ein. Im Gegensatz zum Stand der Technik werden hier die unterschiedlichen Funktionen der Absorption (Erwärmung), der radialen Wärmeleitung (zur Erzeugung einer leistungsabhängigen Temperaturverteilung) und der thermischen Dispersion (zur Erzeugung der thermischen Linse) auf verschiedene Elemente mit unterschiedlichen Materialeigenschaften verteilt und müssen nicht alle von ein und demselben Element erfüllt sein.

Durch Mischen verschiedener Materialien (z. B. Wasser und schweres Wasser) und durch Auswahl einer geeigneten Dicke **d** des Kompensationsraumes **15** kann die Stärke der entstehenden Linse und allenfalls die Absorption optimiert werden. Durch ein Kühlen des Umfangs der Stäbe **13a** und **13b** mit einer sie umschließenden Halterung **17**, welche ebenfalls das Kompensationsmedium **16** aussen kühlt, entsteht eine leistungsabhängige, radial abnehmende Temperaturverteilung, welche wegen der thermischen Dispersion des Kompensationsmediums **16** zu einer leistungsabhängigen Linse führt. Aufgrund der geringen Dickenabmessung des Kompensationsraums **15** ist die Temperaturverteilung im Kompensationsmedium **16** annähernd gleich zu derjenigen in den benachbarten Stäben **13a** und **13b**.

Vorzugsweise haben das Kompensationsmedium **16** und die Stäbe **13a** und **13b** denselben Brechungsindex. Hiermit wird erreicht, dass an den Grenzflächen zwischen Stabstirnfläche und Kompensationsmedium **16** keine Fresnel-Reflexionen auftreten und eine Verformung aufgrund der thermischen Ausdehnung der Stäbe **13a** und **13b** zu keiner Linsenwirkung führt. Die Fresnel-Reflexionen könnte man zwar durch eine Antireflexbeschichtung unterdrücken, was jedoch eine Verteuerung der Einheit **9** nach sich ziehen würde. Die oben angeführten Flüssigkeiten und Gele sind besonders geeignet, da ihr Brechungsindex eingestellt werden kann.

Der Kompensationsraum **15** kann zwei plan-parallele Grenzflächen (Stirnflächen der Stäbe **13a** und **13b**) haben. Es kann aber auch eine spezielle Formung vorgenommen werden, damit auch die im Laserstab **5** auftretenden höheren Aberrationen der thermischen Linse adaptiv kompensiert werden.

Bei einer ausreichend hohen thermischen Dispersion des Kompensationsmediums **16** kann die Dicke **d** des Kompensationsraums **15** so klein gewählt werden, dass keine Konvektion entsteht. Eine Konvektion würde nämlich zu Schlieren führen. Die Konvektion kann durch eine geeignete Wahl der Viskosität vermieden werden, was bei den oben erwähnten Materialien durch geeignete Zusätze möglich ist.

In **Figur 1** sind Angaben zur Anordnung der einzelnen Komponenten eingetragen. Der Laserstab **5** ist hier ein Nd:YAG mit einem Brechungsindex von n_{L} = 1,82, einer Länge L_{L} = 50 mm und einem Durchmesser von **4** mm. Die eine Stirnfläche des Laserstabes **5** hat von dem einen Resonatorspiegel **3a** einen achsialen Abstand von Z - L_{L}/2n_{L}. **Z** ist die Distanz zwischen einem Resonatorspiegel **3a** bzw. **3b** und der Hauptebene der thermischen Linse. Die Größe von **Z** beeinflusst die Modengrösse und den Stabilitätsbereich des Laserresonators **1**. **Z** = 80 mm. Die Brennweite F jeder Linse **7a** und **7b** ist 100 mm. Die optische Einheit **9** hat eine axiale Länge **L**_{**K**} von 20 mm. Die Stäbe **13a** und **13b** sind aus Glas mit einem Brechungsindex von n_{K} = 1,5 und einem Durchmesser von **4** mm. Die Dicke **d** des Kompensationsraumes **15** ist kleiner als 1 mm. Als Kompensationsmedium **15** ist hier OCF-446 verwendet worden.

Wählt man die Dicke **d** wesentlich grösser, muss auch die Viskosität des Kompensationsmediums erhöht bzw. ein Festkörper verwendet werden, damit keine Konvektion mit Schlierenbildung erfolgt.

Eine längere Strecke **Z** ergibt einen grösseren Modendurchmesser der erzeugten Laserstrahlung und damit eine bessere Strahlqualität, was durch eine zusätzlich im Resonator plazierte Linse erreicht werden kann. Die Distanzen **Z** zwischen Resonatorspiegel **3a** bzw. **3b** und der Hauptebene der thermischen Linse muss links und rechts im Resonator **1** nicht gleich gewählt werden. Auch müssen die beiden Resonatorspiegel **3a** und **3b** nicht plan ausgebildet sein; sie können auch gewölbt sein. Es handelt sich hier lediglich um eine von vielen Ausführungsvarianten, wobei alle optischen Komponenten variierbar sind.

Die Stäbe **13a** und **13b** können selbstverständlich auch einen quadratischen, quaderförmigen, regel- oder unregelmäßig vieleckig ausgebildeten Querschnitt haben. Auch kann sich die Querschnittskontur über der Stablänge verändern. Die Stablänge kann größer als die Stabquerdimension, aber auch bedeutend kleiner als diese sein (z. B. dünne Scheibe).

Anstelle eines Festkörperstabes **5** als aktives Medium kann auch ein anderes Verstärkermedium (Entladungsröhre [Gaslaser], Flüssigkeit [Farbstofflaser], ...) eingesetzt werden. Auch ist die Kompensation optisch thermischer Effekte nicht auf Laserresonatoren beschränkt; sie kann auch bei auf nichtlinearen optischen Prozessen beruhenden Mechanismen (Frequenzverdoppelung, parametrische Verstärkung und Oszillation, ...) verwendet werden

In **Figur 2** ist eine weitere Ausführungsvariante eines Laserresonators **29** dargestellt, wobei hier ein Laserstab in mehrere kleine Teilstäbe **30a** bis **30d** unterteilt worden ist, zwischen denen dann eine Kompensation vorgenommen wird. In Analogie zu **Figur 1** besteht nun eine optische Einheit **34a** bis **34c** zur Kompensation jeweils aus den beiden benachbarten optisch transparenten Festkörpern, d. h. den Teilstäben **30a** und **30b**, **30b** und **30c** sowie **30c** und **30d**. Zwischen den Stirnseiten der benachbarten Teilstäbe ist dann das Kompensationsmedium **39** angeordnet. Die Teilstäbe **30a** bis **30d** sind aussen mit einer Kühlung **31** versehen, welche gleichzeitig das Kompensationsmedium **39** in den Kompensationseinheiten **34a** bis **34c** mit dessen Halterungen **35** kühlt. Die Resonatorspiegel sind hier mit **37a** und **37b** gekennzeichnet.

Durch die Erwärmung in den Laserstäben und das seitliche Kühlen, stellt sich in den Teilstäben **30a** bis **30d** eine leistungsabhängige Temperaturverteilung und damit eine leistungsabhängige positive thermische Linse ein. Diese Temperaturverteilung in den Teilstäben **30a** bis **30d** überträgt sich durch den Wärmekontakt zwischen den Stirnflächen der Teilstäbe **30a** bis **30d** auf das Kompensationsmedium, hier mit **39** gekennzeichnet. Hierdurch ensteht in den Kompensationsräumen **41a** bis **41c** durch das dort befindliche Kompensationsmedium **39** eine negative thermische Linse, welche die positive thermische Linse der Teilstäbe **30a** bis **30c** kompensiert. Im Kompensationsmedium ist hier weder eine Absorption der Laserstrahlung noch der Pumpstrahlung notwendig. Man kann jedoch auch eine kontrollierte Absorption des Pumplichts oder der Laserstrahlung im kompensierenden Medium mit einbeziehen. In der Regel absorbieren nämlich alle Medien.

Für die Laserstäbe wird vorzugsweise intrinsisch doppelbrechendes Material, wie z. B. Nd:YVO₄ verwendet. Es tritt dann weder in den Teilstäben **30a** bis **30c** noch im Kompensationsmedium störende thermisch induzierte Doppelbrechung auf. Die optische Achse der Teilstäbe **30a** bis **30c** wird senkrecht zur Resonatorachse **43** ausgerichtet. Um eine, allfällige aufgrund der Anisotropie des Materials der Teilstäbe **30a** bis **30c** verursachte Asymmetrie der thermischen Linse auszumitteln, werden die Teilstäbe so angeordnet, dass in benachbarten Teilstäben die optischen Achsen jeweils um 90° zueinander verdreht sind. Zusätzlich könnte man dann zwischen den einzelnen Teilstäben **30a** bis **30c** die Polarisation der transmittierten Laserstrahlung durch geeignete optische Elemente ebenfalls um 90° drehen. Auf diese Weise kann die Verstärkung der Laserstrahlung optimiert werden (Anisotropie der Kristalle). Als Alternative könnten zusätzlich auch die Stirnflächen der Teilstäbe gewölbt ausgebildet werden. Tritt keine Doppelbrechung auf, müssen Quarzrotatoren eingesetzt werden.

Vorzugsweise wird man hier die Dicke der Kompensationsräume **41a** bis **41c** unter 1 mm (etwa 0,5 mm bis 1 mm) ausbilden. Die Länge der Teilstäbe kann einige Millimeter bis einige Zentimeter bei einem typischen Stabdurchmesser von 4 mm sein. **Z** wird man typischerweise zwischen 20 mm und 100 mm wählen.

Was oben bezüglich der Wärmeübertragung und der Geometrie für die Stäbe **13a** bzw. **13b** ausgeführt worden ist, gilt sinngemäß auch für die Teilstäbe **30a** bis **30d**.

In den **Figuren 1** und **2** ist ein transversales Pumpen des Laserstabs **5** bzw. **30a** bis **30d** dargestellt. Selbstverständlich können auch ein longitudinales Pumpen oder andere Anregungsmechanismen (Gasentladung, HF-Anregung, gasdynamische, elektronische, elektrische Anregung, Elektronenkanone, ...) des Lasermediums verwendet werden.

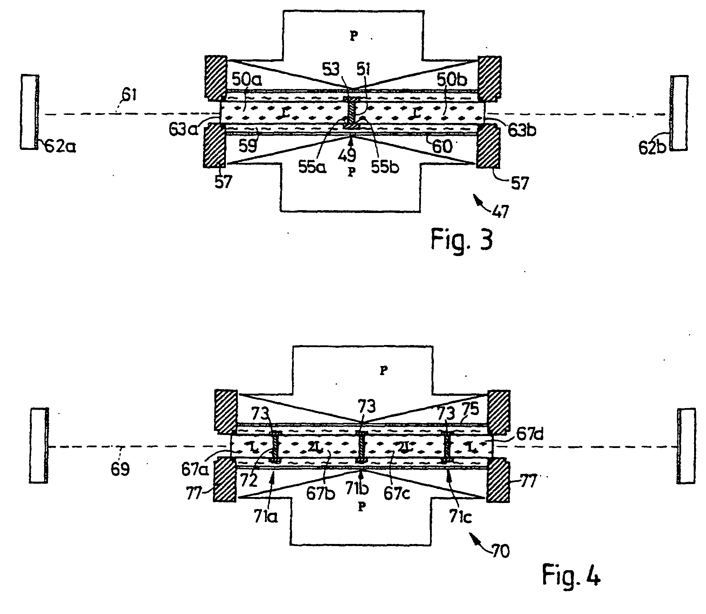

Eine Variante zu den in den **Figuren 1** und **2** gezeigten optischen Anordnungen ist in den **Figuren 3** und **4** dargestellt. Die hier dargestellte Varianten sind einfacher in ihrem mechanischen Aufbau. Sie lassen sich sowohl für fließfähige als auch für nicht fließfähige Kompensationsmaterialien verwenden. Nachfolgend wird eine beispielsweise Verwendung für nicht fließfähige Kompensationsmaterialien beschrieben.

In **Figur 3** ist ein Laserresonator **47** analog zu demjenigen in **Figur 2** gezeigt. Der Laserresonator **47** weist jedoch gegenüber dem Laserresonator **29** wesentliche Unterschiede auf. Als eine thermische Effekte kompensierende Einheit **49** wird hier ein Festkörper, vorzugsweise ein gummielastisches Material, nämlich das bereits eingangs erwähnt Zweikomponentengel OCK-433, im ausgehärteten Zustand verwendet.

Im Laserresonator **47** ist als aktives Medium ein doppelter Laserstab **50a/50b** angeordnet, wobei beide Stäbe **50a** und **50b** durch die kompensierende Einheit **49** voneinander getrennt sind. Die kompensierende Einheit **49** weist ein kompensierendes Medium **51** auf, hier das ausgehärtete OCK-433, welches mit einer transparenten Muffe **53** umgeben ist, in der jeweils ein Endbereich **54a** bzw. **54b** der beiden Endbereiche der beiden Stäbe **50a** und **50b** steckt. Das ausgehärtete OCK-433 dient einmal als Kompensationsmedium und zum Anderen auch als (ausgehärteter) Kleber, der der ganzen Anordnung einen stabilen Zusammenhalt gibt. Die Muffe **53** ist beispielsweise aus Saphir gefertigt. Saphir ist transparent und hat eine sehr gute Wärmeleitfähigkeit. Da in der Regel die Laserstäbe **50a** und **50b** einen kreisförmigen Querschnitt aufweisen, ist auch die Muffe **53** im Querschnitt kreisrund ausgebildet. Die nicht in der Muffe **53** steckenden Endbereiche **55a** und **55b** der Laserstäbe **50a** und **50b** sind analog zur Anordnung in **Figur 2** in einer Halterung **57** gehalten. Die beiden Laserstäbe **50a** und **50b** sowie die Muffe **53** liegen innerhalb eines mit einer Kühlflüssigkeit **59** gefüllten, transparenten Rohres **60**, welches ebenfalls in der Halterung gehalten ist. Die beiden Laserstäbe **50a** und **50b** sowie die Muffe **53** werden an ihrem Mantel durch die Kühlflüssigkeit **59** gekühlt. Beide Stäbe **50a** und **50b** werden, wie durch die beiden Pfeile **P** angedeutet ist, optisch transversal gepumpt. Senkrecht zur optischen Resonatorachse **61** sind die beiden Resonatorspiegel **62a** und **62b** distanziert von den Stabaussenstirnseiten **63a** bzw. **63b** angeordnet.

Ein sehr guter Wärmekontakt zwischen den Stabstirnflächen und dem kompensierenden Medium **51** ist wichtig. Wird beispielsweise das Zweikomponentengel OCK-433 verwendet, so kann dieses zwischen die Stabstirnflächen noch flüssig eingebracht werden. Anschließend härtet das Gel, einen guten Wärmekontakt bildend, aus.

Werden gummielastische Kompensationsmedien verwendet, können sie über die angrenzenden Laserstäbe **50a** und **50b** mittels der Halterung angedrückt werden.

Würde anstelle eines gummielastischen Materials, ein Material mit einem höheren Elastizitätsmodul verwendet, müssten die Strinflächen und die zugeordneten Flächen des Mediums derart aufeinander angepasst hergestellt werden, dass kein "Luftübergang" verbleibt; es müsste ein Ansprengen der beiden benachbarten Flächen erfolgen. Betreffend Erwärmung (Absorption), radiale Wärmeleitung (zur Erzeugung einer leistungsabhängigen Temperaturverteilung) und thermische Dispersion (zur Erzeugung der thermischen Linse) gilt für diese Anordnung dasselbe wie für die vorgängig beschriebenen Anordnungen.

In **Figur 4** ist eine weitere Ausführungvariante gezeigt, welche analog zu der in **Figur 3** dargestellten, aufgebaut ist. Das aktive Medium ist hier jedoch in vier miteinander fluchtende Stäbe **67a** bis **67d** aufgeteilt. Die optische Achse der Laserstäbe **67a** bis **67d** fällt mit der optischen Achse **69** des Laserresonators **70** zusammen. Die beiden mittleren Stäbe **67b** und **67c** sind gleich lang ausgebildet; ebenfalls die beiden äusseren **67a** und **67d**. Jeder der äusseren Stäbe **67a** und **67d** ist jedoch nur halb so lang wie jeder der beiden mittleren Stäbe **67b** und **67c**. Es sind ferner drei kompensierende Einheiten **71a, 71b** und **71d** zur Kompensation thermisch-optischer Effekte bestehend aus einem kompensierenden Medium **72** und einer Muffe **73** vorhanden. Die Anordnung betreffend der Laserstabstirnflächen ist analog zur Ausführung in **Figur 3** vorgenommen. Auch werden hier die Laserstäbe **67a** bis **67d** und die Muffen **73** der Einheiten **71a** bis **71c** analog zur **Figur 3** durch eine in einem transparenten Rohr **75** fliessende Flüssigkeit **76** gekühlt. Eine Halterung **77** für das Rohr **75** und die Laserstabanordnung - **67a** bis **67d** mit **71a** bis **71c** - entspricht der in **Figur 3** gezeigten Halterung **57**.

Sollen hohe Laserausgangsleistungen erzeugt werden, wählt man in der Regel auch lange Laserstäbe. Durch eine Aufteilung in mehrere Laserstäbe gegenüber der Anordnung in **Figur 3** ergibt sich eine bessere thermisch optische Kompensation. Für die Laserstäbe **50a** und **50b** bzw. **67a** bis **67d** gilt dasselbe wie für die Laserstäben **30a** bis **30c**.

In der Regel erzeugt ein Laserstab infolge thermisch optischer Gegebenheiten eine thermisch induzierte Doppelbrechung, bei der für die radial polarisierte Strahlungskomponente ein tieferer Brechungsindex erzeugt wird als für die tangential polarisierte. Das kompensierende Festkörpermedium ist nun in den obigen Ausführungsbeispielen derart ausgewählt, dass sich bei einer Erwärmung der umgekehrte Effekt ergibt.

Wie bereits eingangs erwähnt, kann in der in den **Figuren 3** und **4** dargestellten optischen Anordnung anstelle des festen Zweikomponentengels OCK-433 auch eine Flüssigkeit als Kompensationsmedium verwendet werden. Zum Volumenausgleich wird man dann vorzugsweise ein kleines den Strahlengang nicht störendes Gasbläschen vorsehen. Auf den Volumenausgleich kann jedoch auch verzichtet werden.

Werden als Kompensationsmedien Festkörper, d. h. nicht fließfähige Materialien verwendet, so kann auf die Muffe **53** bzw. **73** verzichtet werden, sofern das Kompensationsmedium sich inert zur Kühlflüssigkeit verhält.

## Patentansprüche

1. Verfahren zur Kompensation thermisch optischer Effekte im Strahlengang einer optische Komponenten enthaltenden Anordnung, **dadurch gekennzeichnet, dass** zur optischen Kompensation im Strahlengang wenigstens zwei unterschiedliche Materialeigenschaften aufweisende optische Elemente **(13a, 13b, 16; 30a-30d, 41a-41c/39; 50a, 50b, 51; 67a-d, 72)** im Zusammenspiel verwendet werden und zur Kompensation eine Erwärmung mittels Strahlungsabsorption, eine Wärmeleitung zur Erzeugung einer leistungsabhängigen Temperaturverteilung und eine thermische Dispersion zur Erzeugung einer thermischen Linse auf die unterschiedlichen Elemente **(13a, 13b, 16; 30a-30d, 41a-41c/39; 50a, 50b, 51; 67a-d, 72)** verteilt wird.

2. Verfahren nach Anspruch 1, **dadurch gekennzeichnet, dass** eines der optischen Elemente **(13a, 13b, 16; 30a-30d, 41a-41c/39; 50a, 50b, 51; 67a-d, 72)** als optisch transparentes Kompensationsmedium **(16; 39; 51; 72)** im Strahlengang **(14; 43; 61, 69)** beidseits in Berührungskontakt mit einem ebenfalls optisch transparenten Festkörper **(13a, 13b; 30a-30d; 50a, 50b; 67a-d)** als weiteres Element gebracht wird und das weitere Element **(13a, 13b; 30a-30d; 50a, 50b; 67a-d)** eine vorgegebene Strahlungsabsorption hat, wobei dessen radiales Erwärmungsmuster durch den Berührungskontakt mit dem Kompensationsmedium **(16; 39; 51; 72)** zur Kompensation thermisch optischer Effekte in den anderen optischen Komponenten **(5, 7a, 7b; 30a-30d; 50a, 50b; 67a-d)** bzw. der angrenzenden Festkörper **(13a, 13b; 30a-30d; 50a, 50b; 67a-d)** eingeprägt wird.

3. Verfahren nach Anspruch 2, insbesondere zur Kompensation thermisch optischer Effekte in einem Laserresonator, **dadurch gekennzeichnet, dass** das weitere Element eine vorgegebene Absorption für die Laserstrahlung im Strahlengang, vorzugsweise für die Pumplichtstrahlung, hat und in bevorzugter Weise das Kompensationsmedium **(16; 39; 51; 72)** und die angrenzenden Festkörper **(13a, 13b; 30a-30d; 50a, 50b; 67a-d)** an ihrem Umfang, insbesondere in gleichem radialen Abstand von der Achse **(14; 43; 61, 69)** des Strahlengangs, vorzugsweise umschliessend, auf gleiche Temperatur gekühlt werden.

4. In den Strahlengang **(14; 43; 61; 69)** einer optischen Anordnung **(1; 29; 47, 70)** einbringbare optische Einheit **(9; 34a-34c; 49; 71a-c)** für eine Kompensation thermisch optischer Effekte von im Strahlengang der Anordnung vorhandener optischer Komponenten **(5, 7a, 7b; 30a-30d; 50a, 50b; 67a-d)** zur Durchführung des Verfahrens nach einem der Ansprüche 1 bis 3, **gekennzeichnet durch** wenigstens zwei unterschiedliche Materialeigenschaften aufweisende, für die Kompensation wirksam zusammen spielende optische Elemente **(13a, 13b, 16; 30a-30d, 41a-41c; 50a, 50b, 51; 72)** im Strahlengang, auf die zur Kompensation eine Erwärmung mittels Strahlungsabsorption, eine Wärmeleitung zur Erzeugung einer leistungsabhängigen Temperaturverteilung und eine thermische Dispersion zur Erzeugung einer thermischen Linse in bevorzugt unterschiedlicher Einwirkung **(13a, 13b, 16; 30a-30d, 39; 50a, 50b, 51; 72)** verteilbar ist.

5. Optische Einheit nach Anspruch 4, **dadurch gekennzeichnet, dass** eines der Elemente einen optischen Kompensationsraum **(15; 41a-41c; 49; 71a-c)** hat, der mit einem optisch transparenten Kompensationsmedium **(16; 39; 51; 72)** gefüllt, insbesondere vollständig gefüllt ist, und beidseits zum Kompensationsraum **(15; 41a-41c)** angeordnete, optisch transparente Festkörper **(13a, 13b; 30a-30d; 50a, 50b; 67a-d)** als weiteres Element mit einer Strahlungsabsorption, mit denen das Kompensationsmedium **(16; 39; 51; 72)** einen derart engen thermischen Kontakt aufweist, dass ein guter Wärmeübergang von den Festkörpern **(13a, 13b; 30a-30d; 50a, 50b; 67a-d)** zum Kompensationsmedium **(16; 39; 51; 72)** gewährleistet ist.

6. Optische Einheit **(9; 34a-34c; 49; 71a-c)** nach Anspruch 5, **dadurch gekennzeich** net, dass der Kompensationsraum **(15; 41a-41c)** sich senkrecht zur optischen Achse **(14; 43)** des Strahlenganges, insbesondere in einer zur Achse des Strahlengangs radialsymmetrischen Ausbildung, erstreckt.

7. Optische Einheit **(9; 34a-34c; 49; 71a-c)** nach Anspruch 5 oder 6, **dadurch gekennzeichnet, dass** die zur optischen Achse **(14; 43; 61, 69)** des Strahlengangs radiale Ausdehnung des Kompensationsraums **(15; 41a-c)** derjenigen der benachbarten Festkörper **(13a, 13b; 30a-30d; 50a, 50b; 67a-d)** angepasst ist, bevorzugt gleich gewählt ist.

8. Optische Einheit **(9; 34a-34c)** nach einem der Ansprüche 5 bis 7, **dadurch gekennzeichnet, dass** die dem Kompensationsmedium **(16; 39)** unmittelbar benachbarten Festkörper **(13a, 13b; 30a-30d)** mit einer kühlenden Halterung **(17; 35)** gehalten sind, welche vorzugsweise den gesamten Mantel des Festkörpers **(13a, 13b; 30a-30d)** im innigen Wärmekontakt vollständig umschliesst.

9. Optische Einheit **(9; 34a-34c)** nach einem der Ansprüche 5 bis 8 **gekennzeichnet durch** ein keine mechanischen Scherkräfte übertragendes Material als Kompensationsmedium und einen Ausdehnungsraum **(19)**, der mit dem Kompensationsraum **(15; 41a-41c)** verbunden ist, in den das Kompensationsmedium **(16; 39)** bei einer thermischen Beaufschlagung einen Volumenausgleich vornehmen kann.

10. Optische Anordnung **(29; 47; 70)** mit einer optischen Einheit **(9; 34a-34c; 49; 71a-c)** nach einem der Ansprüche 3 bis 9 zur Erzeugung oder Verstärkung einer Strahlung mit wenigstens einem optisch aktiven Medium **(30a-30d; 50a, 50b; 67a-d), dadurch gekennzeichnet, dass** das aktive Medium in Teilmedien **(30a-30d; 50a, 50b; 67a-d)** unterteilt ist, zwischen den Teilmedien **(30a-30d; 50a, 50b; 67a-d)** als ein optisches Element ein mit einem Kompensationsmedium **(39; 51, 72)** gefüllter Kompensationsraum **(41a-41c)** als weiteres optisches Element der optischen Einheit **(34a-34c; 49; 71a-c)** angeordnet ist und jedes Teilmedium **(30a-30d; 50a, 50b; 67a-d)** als optisch transparenter Festkörper der Einheit **(34a-34c, 49; 71a-c)** wirkt.

## Claims

1. Method for compensating thermal optical effects in the beam path of an arrangement containing optical components, **characterized in that** at least two optical elements **(13a, 13b, 16; 30a-30d, 41a-41c/39; 50a, 50b, 51; 67a-d, 72)** having different material properties are used in cooperation in the beam path for the purpose of optical compensation, and heating by means of radiation absorption, thermal conduction in order to generate a power-dependent temperature distribution, and thermal dispersion in order to generate a thermal lens are distributed for the purpose of compensation over the different elements **(13a, 13b, 16; 30a-30d, 41a-41c/39; 50a, 50b, 51; 67a-d, 72)**.

2. Method according to Claim 1, **characterized in that** one of the optical elements **(13a, 13b, 16; 30a-30d, 41a-41c/39; 50a, 50b, 51; 67a-d, 72)** is brought as optically transparent compensation medium **(16; 39; 51; 72)** in the beam path **(14; 43; 61, 69)** on both sides into mechanical contact with a likewise optically transparent solid body **(13a, 13b; 30a-30d; 50a, 50b; 67a-d)** as a further element, and the further element **(13a, 13b; 30a-30d; 50a, 50b; 67a-d)** has a prescribed radiation absorption, the radial heating pattern being imprinted by the mechanical contact with the compensation medium **(16; 39; 51; 72)** for compensating thermal optical effects in the other optical components **(5, 7a, 7b; 30a-30d; 50a, 50b; 67a-d)** and/or the adjacent solid bodies **(13a, 13b; 30a-30d; 50a, 50b; 67a-d)**.

3. Method according to Claim 2, in particular for compensating thermal optical effects in a laser resonator, **characterized in that** the further element has a prescribed absorption for the laser radiation in the beam path, preferably for the pumping optical radiation, and in a preferred way the compensation medium **(16; 39; 51; 72)** and the adjacent solid bodies **(13a, 13b; 30a-30d; 50a, 50b; 67a-d)** are cooled to the same temperature at their periphery, preferably in an encompassing fashion, in particular at the same radial distance from the axis **(14; 43; 61, 69)** of the beam path.

4. Optical unit **(9; 34a-34c; 49; 71a-c)**, which can be brought into the beam path **(14; 43; 61; 69)** of an optical arrangement **(1; 29; 47, 70)**, for compensating thermal optical effects of optical components **(5, 7a, 7b; 30a-30d; 50a, 50b; 67a-d)**, present in the beam path of the arrangement, for carrying out the method according to one of Claims 1 to 3, **characterized by** at least two optical elements **(13a, 13b, 16; 30a-30d, 41a-41c; 50a, 50b, 51; 72)**, which have different material properties and cooperate effectively for the compensation, in the beam path, and over which elements there can be distributed, preferably with a different effect **(13a, 13b, 16; 30a-30d, 39; 50a, 50b, 51; 72)**, for the purpose of compensation, heating by means of radiation absorption, thermal conduction for generating a power-dependent temperature distribution, and thermal dispersion for generating a thermal lens.

5. Optical unit according to Claim 4, **characterized in that** one of the elements has an optical compensation space **(15; 41a-41c; 49; 71a-c)** which is filled, in particular completely filled, with an optically transparent compensation medium **(16; 39; 51; 72)**, and optically transparent solid bodies, **(13a, 13b; 30a-30d; 50a, 50b; 67a-d)** arranged on both sides of the compensation space **(15, 41a-41c)**, as further element with radiation absorption, with which solid bodies the compensation medium **(16; 39; 51, 72)** has such a close thermal contact that good.heat transfer from the solid bodies **(13a, 13b; 30a-30d; 50a, 50b; 67a-d)** to the compensation medium **(16; 39; 51; 72)** is ensured.

6. Optical unit **(9; 34a-34c; 49; 71a-c)** according to Claim 5, **characterized in that** the compensation space **(15; 41a-41c)** extends perpendicular to the optical axis **(14; 43)** of the beam path, in particular in a formation which is radially symmetric relative to the axis of the beam path.

7. Optical unit **(9; 34a-34c; 49; 71a-c)** according to Claim 5 or 6, **characterized in that** the radial extent of the compensation space **(15; 41a-c)** relative to the optical axis **(14; 43; 61, 69)** of the beam path is adapted to, preferably being selected to be identical to, that of the neighboring solid bodies **(13a, 13b; 30a-30d; 50a, 50b; 67a-d)**.

8. Optical unit **(9; 34a-34c)** according to one of Claims 5 to 7, **characterized in that** the solid bodies **(13a, 13b; 30a-30d)** immediately neighboring the compensation medium **(16; 39)** are held with the aid of a cooling holder **(17; 35)** which preferably completely encompasses the entire envelope of the solid body **(13a, 13b; 30a-30d)** in intimate thermal contact.

9. Optical unit **(9; 34a-34c)** according to one of Claims 5 to 8, **characterized by** a material, which transmits no mechanical shear forces, as compensation medium and an expansion space **(19)** which is connected to the compensation space **(15; 41a-41c)** into which the compensation medium **(16; 39)** can undertake volumetric equalization in the event of thermal loading.

10. Optical arrangement **(29; 47; 70)** with an optical unit **(9; 34a-34c; 49; 71a-c)** according to one of Claims 3 to 9 for generating or amplifying radiation, having at least one optically active medium **(30a-30d; 50a, 50b; 67a-d)**, **characterized in that** the active medium is subdivided into partial media **(30a-d; 50a, 50b; 67a-d),** a compensation space **(41a-41c)** filled with a compensation medium **(39; 51, 72)** is arranged as an optical element between the partial media **(30a-30d; 50a, 50b; 67a-d)** and as a further optical element of the optical unit **(34a-34c; 49; 71a-c)**, and each partial medium **(30a-30d; 50a, 50b; 67a-d)** acts as an optically transparent solid body of the unit **(34a-34c, 49; 71a-c)**.

## Revendications

1. Procédé pour la compensation d'effets optiques par voie thermique dans le trajet du faisceau d'un montage contenant des composants optiques, **caractérisé en ce qu'**on utilise pour la compensation optique dans le trajet du faisceau conjointement au moins deux éléments optiques présentant des caractéristiques de matériaux différentes (13a, 13b, 16 ; 30a-30d, 41a-41c/39 ; 50a, 50b ; 61a-d, 72) et **en ce que** pour la compensation sur les différents éléments (13a, 13b, 16 ; 30a-30d, 41a-41c/39 ; 50a, 50b, 51 ; 67a-d, 72) on répartit un échauffement par absorption du rayonnement, une conduction thermique pour produire une répartition de température dépendante de la puissance et une dispersion thermique pour produire une lentille thermique.

2. Procédé selon la revendication 1, **caractérisé en ce que** l'un des éléments optiques (13a, 13b, 16 ; 30a-30d, 41a-41c/39 ; 50a, 50b ; 61a-d, 72) comme milieu de compensation optiquement transparent (16 ; 39 ; 51 ; 72) dans le trajet du faisceau (14 ; 43 ; 61, 69) est mis en contact contigu sur les deux faces avec un élément solide également optiquement transparent (13a, 13b ; 30a-30d ; 50a, 50b ; 67a-d) comme autre élément et **en ce que** l'autre élément (13a, 13b ; 30a-30d ; 50a, 50b ; 67ad) a une absorption du rayonnement prédéterminée, en sorte que son modèle d'échauffement radial est appliqué au moyen du contact contigu avec le milieu de compensation (16 ; 39 ; 51 ; 72) à la compensation des effets optiques par voie thermique dans les autres composants optiques (5, 7a, 7b ; 30a-30d ; 50a, 50b ; 67a-d) ou les éléments solides adjacents (13a, 13b ; 30a-30d ; 50a, 50b ; 67a-d).

3. Procédé selon la revendication 2, en particulier pour la compensation d'effets optiques par voie thermique dans un résonateur laser, **caractérisé en ce que** l'autre élément a une absorption prédéterminée pour le rayonnement laser dans le trajet du faisceau, de préférence pour le rayonnement de pompage et **en ce que** de préférence le milieu de compensation (16 ; 39 ; 51 ; 72) et les éléments solides adjacents (13a, 13b ; 30a-30d ; 50a, 50b ; 67a-d) sont refroidis à leur périphérie, en particulier à distance identique de l'axe (14 ; 43 ; 61, 69) du trajet de faisceau, de préférence en l'entourant, à la même température.

4. Dispositif optique (9 ; 34a-c ; 49 ; 71a-c) insérable dans le trajet du faisceau (14 ; 43 ; 61 ; 69) d'un montage optique (1 ; 29 ; 47, 70) pour une compensation des effets optiques par voie thermique de composants optiques présents dans le trajet du faisceau du montage (5, 7a, 7b ; 30a-30d ; 50a, 50b ; 67a-d) pour réaliser le procédé selon une des revendications 1 à 3, **caractérisé par** au moins deux éléments optiques (13a, 13b, 16 ; 30a-30d, 41a-41c ; 50a, 50b, 51 ; 72) dans le trajet du faisceau, coopérant pour la compensation, présentant au moins deux caractéristiques de matériaux différentes, et en ce que pour la compensation on répartit avec un effet de préférence différent (13a, 13b, 16 ; 30a-30d, 39 ; 50a, 50b, 51 ; 72) un échauffement par absorption du rayonnement, une conduction thermique pour produire une répartition de température dépendante de la puissance et une dispersion thermique pour produire une lentille thermique.

5. Dispositif optique selon la revendication 4, **caractérisé en ce qu'**un des éléments a un espace dé compensation optique (15 ; 41 a-41 c ; 49 ; 71 a-c), qui est rempli avec un milieu de compensation optiquement transparent (16 ; 39 ; 51 ; 72), en particulier est complètement rempli, et disposés des deux côtés par rapport à l'espace de compensation (15 ; 41a-41c) des éléments solides optiquement transparents (13a, 13b ; 30a-30d ; 50a, 50b ; 67a-d) comme autre élément avec une absorption du rayonnement, avec lesquels le milieu de compensation (16 ; 39 ; 51 ; 72) présente un contact thermique étroit de sorte qu'un bon transfert de chaleur des éléments solides (13a, 13b ; 30a-30d ; 50a, 50b ; 67a-d) avec le milieu de compensation (16 ; 39 ; 51 ; 72) est garanti.

6. Dispositif optique (9 ; 34a-34c ; 49 ; 71a-c) selon la revendication 5, **caractérisé en ce que** l'espace de compensation (15 ; 41a-41c) s'étend perpendiculairement par rapport à l'axe optique (14 ; 43) du trajet du faisceau, en particulier dans une configuration à symétrie radiale par rapport à l'axe du trajet du faisceau.

7. Dispositif optique (9 ; 34a-34c ; 49 ; 71a-c) selon la revendication 5 ou 6, **caractérisé en ce que** la dilatation radiale de l'espace de compensation (15 ; 41a-c) par rapport à l'axe optique (14 ; 43 ; 61, 69) du trajet du faisceau est adaptée à celle des éléments solides voisins (13a, 13b ; 30a-30d ; 50a, 50b ; 67a-d), est choisie de préférence identique.

8. Dispositif optique (9 ; 34a-34c) selon une des revendications 5 à 7, **caractérisé en ce que** les éléments solides (13a, 13b ; 30a-30d), immédiatement voisins du milieu de compensation (16 ; 39) sont maintenus par une fixation réfrigérante (17 ; 35), qui entoure de préférence complètement tout le manteau de l'élément solide (13a, 13b ; 30a-30d) en contact thermique étroit.

9. Dispositif optique (9 ; 34a-34c) selon une des revendications 5 à 8, **caractérisé par** un matériau ne supportant pas de forces mécaniques de cisaillement comme milieu de compensation et un espace de dilatation (19), qui est relié à l'espace de compensation (15 ; 41a-41c), dans lequel le milieu de compensation (16 ; 39) peut effectuer une compensation de volume dans le cas d'une charge thermique.

10. Montage optique (29 ; 47 ; 70) avec un dispositif optique (9 ; 34a-34c ; 49 ; 71a-c) selon l'une des revendications 3 à 9 pour la production ou l'amplification d'un rayonnement avec au moins un milieu optiquement actif (30a-30d ; 50a, 50b ; 67ad), **caractérisé en ce que** le milieu actif est divisé en milieux partiels (30a-30d ; 50a, 50b ; 67a-d), est monté entre les milieux partiels (30a-30d ; 50a, 50b ; 67a-d) comme un élément optique avec un espace de compensation (41a-41c) rempli avec un milieu de compensation (39 ; 51 ; 72) comme autre élément optique du dispositif optique (34a-34c ; 49 ; 71a-c) et **en ce que** chaque milieu partiel (30a-30d ; 50a, 50b ; 67a-d) fonctionne comme élément solide optiquement transparent du dispositif (34a-34c ; 49 ; 71 a-c).
